# EUROPEAN PATENT APPLICATION

(11) **EP 4 796 376 A1**
(43) Date of publication of application: **26.08.2026**
(21) Application number: 24883590.2
(22) Date of filing: 19.12.2024
(51) Int. Cl.: B60L 53/62, B60L 53/53, B60L 53/31, H02J 3/32, H02J 7/34

(54) **INTEGRATED STORAGE AND CHARGING DEVICE, CHARGING CONTROL METHOD, CHARGING PILE AND CHARGING SYSTEM**

(30) Priority: 18.11.2024 CN 202411642143
(71) Applicant: Contemporary Amperex Technology Co., Limited, Jiaocheng District Ningde Fujian 352100 (CN)
(72) Inventor: WU, Kai, Ningde, Fujian 352100 (CN); XU, Jinmei, Ningde, Fujian 352100 (CN); ZHENG, Zhimin, Ningde, Fujian 352100 (CN); CHENG, Yong, Ningde, Fujian 352100 (CN)
(74) Representative: Lorenz Seidler Gossel Part. mbB
(86) International application number: PCT/CN2024/140642
(87) International publication number: WO 2026/102859

(57) **Abstract**

This disclosure discloses a storage and charging integrated apparatus, a charging control method, a charging station, and a charging system. The storage and charging integrated apparatus includes an energy storage module and a charging module. A first input terminal of the charging module is connected to a first output terminal of an AC-DC conversion module, a first terminal of the energy storage module is connected to a second output terminal of the AC-DC conversion module, a second terminal of the energy storage module is connected to a second input terminal of the charging module, and an input terminal of the AC-DC conversion module is connected to an AC power grid. The charging module is configured to perform charging output based on a first charging power and a second charging power connected in series, and provide a third charging power output by the charging module for a to-be-charged device; where the first charging power is provided based on a working state of the AC-DC conversion module, and the second charging power is provided by the energy storage module.

## Description

### CROSS-REFERENCE TO RELATED APPLICATIONS

This disclosure claims priority to Chinese patent application No. 202411642143.2, filed on November 18, 2024 and entitled "STORAGE AND CHARGING INTEGRATED APPARATUS, CHARGING CONTROL METHOD, CHARGING STATION, AND CHARGING SYSTEM", which is incorporated herein by reference in its entirety.

### TECHNICAL FIELD

This disclosure relates to the field of charging technology, and in particular, to a storage and charging integrated apparatus, a charging control method, a charging station, and a charging system.

### BACKGROUND

With the increase in the number of new energy vehicles, the requirements for charging facilities are becoming increasingly high. Integrated with the functions of energy storage and charging, a storage and charging integrated apparatus can adjust the power load, increasing long-term benefits. At present, the storage and charging integrated apparatus has been widely used in charging stations for new energy vehicles.

However, with the popularity of fast charging/ultra-fast charging electric vehicles, fast charging/ultra-fast charging stations are less applied currently. Additionally, the fast charging/ultra-fast charging stations in the related technology all require additional transformers or transformer capacity expansion, which not only increases costs but also is not conducive to fast charging of electric vehicles.

### SUMMARY

This disclosure mainly provides a storage and charging integrated apparatus, a charging control method, a charging station, and a charging system, to implement high-power output of the storage and charging integrated apparatus based on the small power provided by the AC power grid without configuration of additional transformers, thereby reducing the cost of the storage and charging integrated apparatus and improving the charging speed of the storage and charging integrated apparatus.

The technical solutions of this disclosure are implemented as follows.

According to a first aspect, an embodiment of this disclosure provides a storage and charging integrated apparatus. The storage and charging integrated apparatus includes an energy storage module and a charging module, where
a first input terminal of the charging module is connected to a first output terminal of an AC-DC conversion module, a first terminal of the energy storage module is connected to a second output terminal of the AC-DC conversion module, a second terminal of the energy storage module is connected to a second input terminal of the charging module, and an input terminal of the AC-DC conversion module is connected to an AC power grid; a working state of the AC-DC conversion module includes a positive polarity working state and a negative polarity working state, and the AC-DC conversion module is configured to provide a first charging power based on the working state; and
the charging module is configured to perform charging output based on the first charging power and a second charging power connected in series, and provide a third charging power output by the charging module for a to-be-charged device; where the second charging power is provided by the energy storage module, and the third charging power is greater than the first charging power.

Through the above technical means, the first charging power provided by the AC-DC conversion module and the second charging power provided by the energy storage module are both connected in series to the charging module for charging output, enabling the charging module to provide the third charging power to the to-be-charged device. In this way, since the energy storage module can output a relatively high second charging power, the storage and charging integrated apparatus enables, just based on the lower power provided by the AC power grid, the charging module to output the third charging power that meets the ultra-fast/fast charging demand. Therefore, there is no need to configure additional transformers in the circuit, which reduces the cost of the storage and charging integrated apparatus, and also reduces the size of the storage and charging integrated apparatus. Moreover, the storage and charging integrated apparatus can be connected to any position of the AC power grid, without being limited by the transformer access points. This improves the flexibility of the storage and charging integrated apparatus, and facilitates the fast charging of electric vehicles. In addition, the AC-DC conversion module has different working states and can provide the first charging power in different directions based on the working states, thereby expanding the range of the third charging power output by the charging module and enhancing the flexibility of charging.

In some embodiments, a positive electrode terminal of the energy storage module is connected to a negative electrode terminal of the AC-DC conversion module, a negative electrode terminal of the energy storage module is connected to a negative electrode terminal of the charging module, and a positive electrode terminal of the charging module is connected to a positive electrode terminal of the AC-DC conversion module; or a negative electrode terminal of the energy storage module is connected to a positive electrode terminal of the AC-DC conversion module, a positive electrode terminal of the energy storage module is connected to a positive electrode terminal of the charging module, and a negative electrode terminal of the charging module is connected to a negative electrode terminal of the AC-DC conversion module.

Through the above technical means, the energy storage module can be disposed on the positive electrode side of the AC-DC conversion module or the negative electrode side of the AC-DC conversion module. This can improve the arrangement flexibility of the modules in the storage and charging integrated apparatus.

In some embodiments, the storage and charging integrated apparatus further includes the AC-DC conversion module, where the AC-DC conversion module is configured to provide the first charging power to the charging module and the energy storage module.

Through the above technical means, the AC-DC conversion module can also be disposed inside the storage and charging integrated apparatus, which facilitates the direct connection of the storage and charging integrated apparatus to the AC power grid for charging, thereby improving the convenience of charging.

In some embodiments, the storage and charging integrated apparatus further includes a first switch module; and the first switch module includes a first switch and a second switch, where the first switch is connected in series between the first output terminal of the AC-DC conversion module and the first input terminal of the charging module, and the second switch is connected in series between the second terminal of the energy storage module and the second input terminal of the charging module.

Through the above technical means, whether the energy storage module and the AC-DC conversion module charge the charging module is controlled by controlling the on or off states of the first switch and the second switch. In this way, the on or off state of the charging circuit can be controlled according to the situation, thereby reducing the power consumption of the storage and charging integrated apparatus.

In some embodiments, the first switch module further includes a third switch, a fourth switch, and a fifth switch, where one terminal of the third switch is connected to the second output terminal of the AC-DC conversion module and one terminal of the fifth switch, another terminal of the third switch is connected to the first terminal of the energy storage module, one terminal of the fourth switch is connected to the second terminal of the energy storage module, another terminal of the fourth switch is connected to another terminal of the fifth switch and one terminal of the second switch, and another terminal of the second switch is connected to the second input terminal of the charging module.

Through the above technical means, the on or off states of multiple switches in the first switch module are controlled to charge the to-be-charged device by the AC-DC conversion module alone, or charge the to-be-charged device jointly by the AC-DC conversion module and the energy storage module connected in series, or control the to-be-charged device to feed back energy to the AC power grid to implement the vehicle-to-grid (Vehicle-to-Grid, V2G) function. In this way, the charging mode or discharging mode of the to-be-charged device can be switched according to different application scenarios, improving the energy utilization efficiency and the intelligence level of the storage and charging integrated apparatus.

In some embodiments, the storage and charging integrated apparatus further includes a second switch module, and the second switch module includes a sixth switch, where one terminal of the sixth switch is connected to the first output terminal of the AC-DC conversion module, and another terminal of the sixth switch is connected to the first terminal of the energy storage module and one terminal of the third switch.

Through the above technical means, based on the on or off states of the switches in the first switch module and the second switch module, the storage and charging integrated apparatus is controlled to implement different charging or discharging functions. In this way, the charging state and discharging state of the energy storage module can be controlled according to the demand, thereby improving the energy utilization and management efficiency of the storage and charging integrated apparatus.

In some embodiments, the storage and charging integrated apparatus further includes a second switch module, and the second switch module includes a seventh switch and an eighth switch, where the seventh switch is connected in series between the first output terminal of the AC-DC conversion module and the first terminal of the energy storage module, and the eighth switch is connected in series between the second output terminal of the AC-DC conversion module and the second terminal of the energy storage module.

Through the above technical means, the charging or discharging of the energy storage module is controlled by controlling the on or off states of the seventh switch and the eighth switch. In this way, the charging and discharging states of the energy storage module can be controlled according to the demand, thereby improving the energy utilization and management efficiency of the storage and charging integrated apparatus.

In some embodiments, the energy storage module includes at least one energy storage unit, where the at least one energy storage unit is connected in series and/or in parallel between the first terminal of the energy storage module and the second terminal of the energy storage module to provide the second charging power.

Through the above technical means, the energy storage module includes multiple energy storage units connected in series and/or in parallel. Thus, due to the modularity of the energy storage units, the energy storage units can be freely added or removed, facilitating the fast connection and removal of the energy storage units, thereby improving the charging flexibility of the storage and charging integrated apparatus.

In some embodiments, each energy storage unit includes an energy storage battery, and each energy storage unit is configured to provide a fourth charging power based on energy of the energy storage battery, where the fourth charging power is less than or equal to the second charging power.

Through the above technical means, each energy storage unit includes at least one energy storage battery, thereby controlling the output power of the storage and charging integrated apparatus to meet different charging needs.

In some embodiments, at least some of the at least one energy storage unit includes a third switch module, and the third switch module is connected in series between a first terminal of the corresponding energy storage unit and the second output terminal of the AC-DC conversion module.

Through the above technical means, the number of energy storage units connected in series to the AC-DC conversion module is controlled by controlling the on or off state of the third switch module. In this way, the number of energy storage units to be connected can be flexibly selected according to the charging power demand of the to-be-charged device, improving the flexibility of charging.

In some embodiments, the storage and charging integrated apparatus further includes a control module, where the control module is connected to the first switch module, the second switch module, and the third switch module, and is configured to send drive signals to the first switch module, the second switch module, and the third switch module; where the drive signals are used to control the on and off states of the first switch module, the second switch module, and the third switch module.

Through the above technical means, the control module controls the on or off state of each switch, enabling the storage and charging integrated apparatus to implement different functions. This improves the convenience and safety of controlling the storage and charging integrated apparatus.

In some embodiments, the storage and charging integrated apparatus further includes a communication module, and the communication module is connected to the control module, where the control module is configured to obtain a status parameter of the storage and charging integrated apparatus and send the status parameter of the storage and charging integrated apparatus to the communication module; and the communication module is configured to receive the status parameter of the storage and charging integrated apparatus and forward the status parameter to a cloud platform.

Through the above technical means, the communication module feeds back the status parameter collected by the control module to the cloud platform. In this way, the operating data of the storage and charging integrated apparatus can be saved in a timely manner, and the operating status of the storage and charging integrated apparatus can be obtained, thereby improving the operational reliability of the storage and charging integrated apparatus.

In some embodiments, the AC-DC conversion module is a bidirectional ACDC module.

Through the above technical means, the AC-DC conversion module is a bidirectional ACDC module. In this way, bidirectional energy exchange is implemented between the storage and charging integrated apparatus and the AC power grid, enabling the storage and charging integrated apparatus to not only charge the to-be-charged device but also feed back energy to the power grid. This facilitates peak cut for the power grid, improving the stability and energy utilization of the power grid.

In some embodiments, a ratio between rated energy and rated power of the energy storage module is less than or equal to a first preset value, and a ratio between input power and output power of the storage and charging integrated apparatus is less than or equal to a second preset value, where the first preset value is greater than the second preset value.

Through the above technical means, by limiting the ratio between the rated energy and rated power of the energy storage module, and the ratio between the input power and output power of the storage and charging integrated apparatus, high cost performance and good performance can be achieved under the condition of low power input and high power output.

In some embodiments, the first charging power is less than or equal to 150 kilowatts, and the third charging power is greater than or equal to 360 kilowatts.

Through the above technical means, the first charging power and the third charging power are limited, so that the storage and charging integrated apparatus can implement the functions of low-power input and high-power output without configuration of additional transformers, thereby implementing ultra-fast charging for the to-be-charged device.

According to a second aspect, an embodiment of this disclosure provides a charging control method applied to a storage and charging integrated apparatus, the storage and charging integrated apparatus including an energy storage module and a charging module. The method includes:
performing, through the AC-DC conversion module, AC-DC conversion on a power provided by an AC power grid, outputting a first charging power based on a working state of the AC-DC conversion module, and outputting a second charging power through the energy storage module, where the working state of the AC-DC conversion module includes a positive polarity working state and a negative polarity working state; and
providing the first charging power and the second charging power connected in series for the charging module for charging output, and providing a third charging power output by the charging module for a to-be-charged device, where the third charging power is greater than the first charging power.

Through the above technical means, the first charging power provided by the AC-DC conversion module and the second charging power provided by the energy storage module are combined to perform charging output to the charging module, enabling the charging module to provide the third charging power to the to-be-charged device. In this way, since the energy storage module can output a relatively high second charging power, the storage and charging integrated apparatus enables, just based on the lower power provided by the AC power grid, the charging module to output the third charging power that meets the ultra-fast/fast charging demand. Therefore, there is no need to configure additional transformers in the circuit, which reduces the cost of the storage and charging integrated apparatus, and also reduces the size of the storage and charging integrated apparatus. Moreover, the storage and charging integrated apparatus can be connected to any position of the AC power grid, without being limited by the transformer access points. This improves the flexibility of the storage and charging integrated apparatus, and facilitates the fast charging of electric vehicles.

In some embodiments, the storage and charging integrated apparatus further includes a first switch module, and the first switch module includes a first switch and a second switch; and the method further includes: when the first switch and the second switch are both in an on state, enabling the charging module to charge the to-be-charged device based on the first charging power provided by the AC-DC conversion module and the second charging power provided by the energy storage module.

Through the above technical means, whether the energy storage module and the AC-DC conversion module charge the charging module is controlled by controlling the on or off states of the first switch and the second switch. In this way, the on or off state of the charging circuit can be controlled according to the situation, thereby reducing the power consumption of the storage and charging integrated apparatus.

In some embodiments, the storage and charging integrated apparatus further includes a first switch module, and the first switch module includes a first switch, a second switch, a third switch, a fourth switch, and a fifth switch; and the method further includes: when the first switch, the second switch, the third switch, and the fourth switch are all in an on state and the fifth switch is in an off state, enabling the charging module to charge the to-be-charged device based on the first charging power provided by the AC-DC conversion module and the second charging power provided by the energy storage module; or when the first switch, the second switch, and the fifth switch are all in an on state and the third switch and the fourth switch are in an off state, enabling the charging module to charge the to-be-charged device based on the first charging power provided by the AC-DC conversion module, or feeding back energy to the AC power grid based on an output power of the to-be-charged device.

Through the above technical means, the on or off states of multiple switches in the first switch module are controlled to charge the to-be-charged device by the AC-DC conversion module alone, or charge the to-be-charged device jointly by the AC-DC conversion module and the energy storage module connected in series, or control the to-be-charged device to feed back energy to the AC power grid to implement the vehicle-to-grid (Vehicle-to-Grid, V2G) function. In this way, the charging mode or discharging mode of the to-be-charged device can be switched according to different application scenarios, improving the energy utilization efficiency and the intelligence level of the storage and charging integrated apparatus.

In some embodiments, the storage and charging integrated apparatus further includes a second switch module, and the second switch module includes a sixth switch; and the method further includes: when the fourth switch, the fifth switch, and the sixth switch are all in an on state, charging the energy storage module based on the first charging power provided by the AC-DC conversion module, or feeding back energy to the AC power grid based on an output power of the energy storage module.

Through the above technical means, based on the on or off state of each switch in the second switch module, the storage and charging integrated apparatus is controlled to implement different charging or discharging functions. In this way, the charging and discharging states of the energy storage module can be controlled according to the demand, thereby improving the energy utilization and management efficiency of the storage and charging integrated apparatus.

In some embodiments, the storage and charging integrated apparatus further includes a second switch module, and the second switch module includes a seventh switch and an eighth switch; and the method further includes: when the seventh switch and the eighth switch are both in an on state, charging the energy storage module based on the first charging power provided by the AC-DC conversion module; or feeding back energy to the AC power grid based on an output power of the energy storage module.

Through the above technical means, the charging or discharging of the energy storage module is controlled by controlling the on or off states of the seventh switch and the eighth switch. In this way, the charging and discharging states of the energy storage module can be controlled according to the demand, thereby improving the energy utilization and management efficiency of the storage and charging integrated apparatus.

In some embodiments, the energy storage module includes at least one energy storage unit, and at least some of the at least one energy storage unit includes a third switch module; and the method further includes: when the third switch module is in an on state, connecting the third switch module in series to the at least one energy storage unit in a charging circuit where the third switch is located to provide the second charging power.

Through the above technical means, the number of energy storage units connected in series to the AC-DC conversion module is controlled by controlling the on or off state of the third switch module. In this way, the number of energy storage units to be connected can be flexibly selected according to the charging power demand of the to-be-charged device, improving the flexibility of charging.

According to a third aspect, an embodiment of this disclosure provides a charging station, where the charging station includes the storage and charging integrated apparatus according to any one of the embodiments in the first aspect.

Through the above technical means, the storage and charging integrated apparatus in the charging station can output a relatively high third charging power that meets the ultra-fast/fast charging demand based on the relatively low power provided by the AC power grid, so there is no need to configure additional transformers in the circuit, which reduces the cost of the storage and charging integrated apparatus and also reduces the size of the storage and charging integrated apparatus. Moreover, the storage and charging integrated apparatus can be connected to any position of the AC power grid, without being limited by the transformer access points. This improves the flexibility of the charging station, and facilitates the fast charging of the to-be-charged device.

According to a fourth aspect, an embodiment of this disclosure provides a charging system, where the charging system includes a to-be-charged device and the charging station according to the third aspect.

Through the above technical means, without configuration of additional transformers, the charging station in the charging system can implement high-power output for the to-be-charged device based on the low-power input from the AC power grid. This not only reduces the cost and size of the charging system, but also improves the charging speed.

In some embodiments, the charging module includes a charging gun, and an output terminal of the charging gun is connected to the to-be-charged device, where the storage and charging integrated apparatus is configured to charge the to-be-charged device through the charging gun based on the first charging power provided by the AC-DC conversion module and the second charging power provided by the energy storage module, where the third charging power is greater than the first charging power.

Through the above technical means, charging the to-be-charged device through the charging gun improves the stability of the charging process.

In some embodiments, the charging system further includes a cloud platform, and the cloud platform is connected to the storage and charging integrated apparatus, where the cloud platform is configured to receive a status parameter of the storage and charging integrated apparatus.

Through the above technical means, the cloud platform receives the status parameter of the storage and charging integrated apparatus, to facilitate real-time monitoring of the status of the storage and charging integrated apparatus, allowing for timely handling of abnormalities upon occurrence.

It should be understood that the foregoing general description and the following detailed description are merely illustrative and explanative, and are not intended to limit the technical solutions of this disclosure.

### BRIEF DESCRIPTION OF DRAWINGS

FIG. 1 is a first schematic diagram of a composition structure of a storage and charging integrated apparatus according to an embodiment of this disclosure;
FIG. 2 is a second schematic diagram of a composition structure of a storage and charging integrated apparatus according to an embodiment of this disclosure;
FIG. 3 is a third schematic diagram of a composition structure of a storage and charging integrated apparatus according to an embodiment of this disclosure;
FIG. 4 is a fourth schematic diagram of a composition structure of a storage and charging integrated apparatus according to an embodiment of this disclosure;
FIG. 5 is a fifth schematic diagram of a composition structure of a storage and charging integrated apparatus according to an embodiment of this disclosure;
FIG. 6 is a sixth schematic diagram of a composition structure of a storage and charging integrated apparatus according to an embodiment of this disclosure;
FIG. 7 is a seventh schematic diagram of a composition structure of a storage and charging integrated apparatus according to an embodiment of this disclosure;
FIG. 8 is an eighth schematic diagram of a composition structure of a storage and charging integrated apparatus according to an embodiment of this disclosure;
FIG. 9 is a ninth schematic diagram of a composition structure of a storage and charging integrated apparatus according to an embodiment of this disclosure;
FIG. 10 is a tenth schematic diagram of a composition structure of a storage and charging integrated apparatus according to an embodiment of this disclosure;
FIG. 11 is a schematic diagram of a composition structure of an energy storage unit according to an embodiment of this disclosure;
FIG. 12 is a schematic flowchart of a charging control method according to an embodiment of this disclosure;
FIG. 13 is a schematic diagram of a composition structure of a charging station according to an embodiment of this disclosure;
FIG. 14 is a first schematic diagram of a composition structure of a charging system according to an embodiment of this disclosure;
FIG. 15 is a second schematic diagram of a composition structure of a charging system according to an embodiment of this disclosure; and
FIG. 16 is a third schematic diagram of a composition structure of a charging system according to an embodiment of this disclosure.

### DETAILED DESCRIPTION

To gain a more detailed understanding of the features and technical content of the embodiments of this disclosure, the implementation of the embodiments of this disclosure will be described in detail below in conjunction with the accompanying drawings, which are provided for illustrative purposes only and are not intended to limit the embodiments of this disclosure.

Unless otherwise defined, all technical and scientific terms used herein have the same meaning as commonly understood by those skilled in the art to which this disclosure belongs. The terminology used herein is for the purpose of describing the embodiments of this disclosure only and is not intended to limit this disclosure.

In the following description, "some embodiments" describe a subset of all possible embodiments, but it is understood that "some embodiments" may be the same subset or different subsets of all possible embodiments and may be combined with each other in the case of no conflicts.

It should also be noted that the terms "first\second\third" used in the embodiments of this disclosure are only for distinguishing similar objects and do not represent a specific order for the objects. It is understood that "first\second\third" can be interchanged in a specific order or sequence where allowed, so that the embodiments of this disclosure described herein can be implemented in an order other than that illustrated or described herein.

In addition, reference to "embodiment" in the specification means that specific features, structures, or characteristics described with reference to the embodiment may be included in at least one embodiment of this application. The word "embodiment" appearing in various places in this specification does not necessarily refer to the same embodiment or an independent or alternative embodiment that is exclusive of other embodiments. Persons skilled in the art explicitly and implicitly understand that the embodiments described herein may be combined with other embodiments.

The following describes the related technology of this disclosure.

New energy batteries are being more and more widely used in life and industry. For example, new energy vehicles equipped with batteries have been widely used. In addition, batteries are also increasingly used in the field such as energy storage.

At present, new energy batteries are being increasingly widely used in life and industry. New energy batteries have been widely used in energy storage power supply systems such as hydroelectric power plants, thermal power plants, wind power plants, and solar power plants, in electric transportation tools such as electric bicycles, electric motorcycles, and electric vehicles, as well as in many other fields such as aerospace. With the continuous expansion of application fields of traction batteries, market demands for traction batteries are also increasing.

In the embodiments of this disclosure, the battery may be a battery cell. The battery cell is a basic unit that can implement mutual conversion of chemical energy and electrical energy, and can be used to make battery modules or battery packs for powering electric apparatuses. The battery cell may be a secondary battery. The secondary battery refers to a battery cell that can be recharged to activate active materials for continuous use after the battery cell is discharged. The battery cell may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, or the like. This is not limited in the embodiments of this application.

In the embodiments of this disclosure, the battery may also be a single physical module that includes one or more battery cells for providing higher voltage and capacity. When there are a plurality of battery cells, the plurality of battery cells are connected in series, parallel, or series-parallel through busbar components.

To adjust the power load and increase long-term benefits, the storage and charging integrated apparatus are being more frequently used in places such as charging stations and parking lots. Herein, "storage" refers to the intelligent battery module that stores electricity, and "charging" refers to charging new energy vehicles. Therefore, the storage and charging integrated apparatus can supply power to the power grid or vehicles through the battery module during peak power consumption periods of the power grid; during off-peak power consumption periods of the power grid, the power grid charges the battery module and the vehicles, thereby implementing peak cut.

At present, new energy vehicles have multiple charging modes such as slow charging, fast charging, and ultra-fast charging. The charging power of slow charging is usually 3-7 kW, taking 8-10 hours to fully charge the battery in the new energy vehicle. The charging power of fast charging and ultra-fast charging is generally higher, reaching dozens to hundreds of kW, which can provide a large amount of electrical energy to new energy vehicles in a short period of time.

Although ultra-fast/fast charging can shorten the charging time of new energy vehicles, ultra-fast charging has high requirements for battery design, charging design, power grid, and infrastructure. For example, fast charging/ultra-fast charging stations require configuration of additional transformers or capacity expansion of transformers, which not only increases costs but also leads to larger sizes. Moreover, such transformers require prior application, so the charging access points are relatively fixed, which is not conducive to fast charging of electric vehicles.

In view of this, the embodiments of this disclosure provide a storage and charging integrated apparatus, a charging control method, a charging station, and a charging system. A first charging power provided by an AC-DC conversion module and a second charging power provided by an energy storage module are combined to perform charging output to a charging module, enabling the charging module to provide a third charging power to a to-be-charged device. In this way, since the energy storage module can output a relatively high second charging power, the storage and charging integrated apparatus enables, just based on a low power provided by an AC power grid, the charging module to output a relatively high third charging power that meets the ultra-fast/fast charging demand. Therefore, there is no need to configure additional transformers in the circuit, which reduces the cost of the storage and charging integrated apparatus, and also reduces the size of the storage and charging integrated apparatus. Moreover, the storage and charging integrated apparatus can be connected to any position of the AC power grid, without being limited by the transformer access points. This improves the flexibility of the storage and charging integrated apparatus, and facilitates the fast charging of electric vehicles.

The following further details this disclosure through the accompanying drawings and specific embodiments.

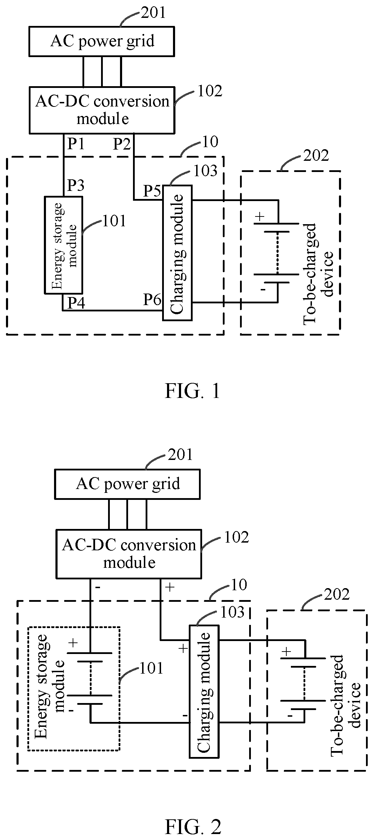

In an embodiment of this disclosure, FIG. 1 is a first schematic diagram of a composition structure of a storage and charging integrated apparatus according to an embodiment of this disclosure. As shown in FIG. 1, the storage and charging integrated apparatus 10 includes an energy storage module 101 and a charging module 103, where
a first input terminal P5 of the charging module 103 is connected to a first output terminal P2 of an AC-DC conversion module 102, a first terminal P3 of the energy storage module 101 is connected to a second output terminal P1 of the AC-DC conversion module 102, a second terminal P4 of the energy storage module 101 is connected to a second input terminal P6 of the charging module 103, and an input terminal of the AC-DC conversion module 102 is connected to an AC power grid 201; a working state of the AC-DC conversion module 102 includes a positive polarity working state and a negative polarity working state, and the AC-DC conversion module 102 is configured to provide a first charging power based on the working state; and
the charging module 103 is configured to perform charging output based on the first charging power and a second charging power connected in series, and provide a third charging power output by the charging module 103 for a to-be-charged device 202, where the second charging power is provided by the energy storage module 101, and the third charging power is greater than the first charging power.

It should be noted that in the embodiments of this disclosure, the first output terminal P1 of the AC-DC conversion module 102, the second output terminal P2 of the AC-DC conversion module 102, the first terminal P3 of the energy storage module 101, the second terminal P4 of the energy storage module 101, the first input terminal P5 of the charging module 103, and the second input terminal P6 of the charging module 103 can be determined as positive electrode terminals or negative electrode terminals according to the specific structure to allow the energy storage module 101 and the AC power grid 201 to jointly power the to-be-charged device 202.

In the embodiments of this disclosure, the energy storage module 101 may be a battery capable of storing electrical energy in the storage and charging integrated apparatus 10, such as a lithium iron phosphate battery or a lithium-ion battery. The energy storage module 101 is capable of storing electrical energy output or converted by the AC power grid 201 or a renewable energy source such as a photovoltaic power generation device. The battery capacity and type of the energy storage module 101 are not limited herein, but in normal cases, an output power U2 of the energy storage module 101, namely the second charging power, is generally greater than 210 kW.

It should be noted that the AC power grid 201 may be a three-phase AC power grid, with an input power generally less than or equal to 150 kW. In the embodiments of this disclosure, the AC power grid 201 is connected to the AC-DC conversion module 102 and can output AC voltage and AC current to the AC-DC conversion module 102. Those skilled in the art can understand that the AC power grid 201 generally refers to a system capable of providing power. For example, the AC power grid 201 may be a power source of municipal power.

In the embodiments of this disclosure, the AC-DC conversion module 102 can be disposed outside the storage and charging integrated apparatus 10 and is an isolated bidirectional AC/DC (Alternating current/Direct current, AC/DC) converter, or a rectifier, which is a power conversion device capable of converting AC power to DC power or converting DC power to AC power. An isolation chip can also be disposed in the AC-DC conversion module 102 to isolate the AC power grid 201 from the charging module 103, the to-be-charged device 202, and the like, preventing the AC power grid 201 from causing damage to the storage and charging integrated apparatus 10 and the to-be-charged device 202. It should be understood that after the input power of the AC power grid 201 is converted by the AC-DC conversion module 102, its output power, namely the first charging power, should be less than or equal to 150 kW.

In addition, in the embodiments of this disclosure, the AC-DC conversion module 102 has different working states, for example, may include a positive polarity working state and a negative polarity working state. The positive polarity working state may refer to a situation where the AC-DC conversion module 102 outputs the first charging power in a direction towards the charging module 103, which is called "forward flow", so the output first charging power is of positive polarity. A sum of the first charging power and the second charging power output by the energy storage module 101 is used to perform charging output for the charging module 103, where the obtained third charging power is the sum of the first charging power and the second charging power. The negative polarity working state may refer to a situation where the AC-DC conversion module 102 outputs the first charging power in a direction towards the energy storage module 101, which is called "reverse flow", so the output first charging power is of negative polarity (or "reverse polarity"). In this case, the third charging power output by the energy storage module 101 is partially cancelled out by the first charging power, and then charging output is performed for the charging module 103, where the obtained third charging power is a difference between the second charging power and the first charging power.

It should also be noted that the power required for fast charging/ultra-fast charging is generally greater than or equal to 360 kW, and that the output power U3 of the charging module 103, namely the third charging power, needs to be greater than or equal to 360 kW, which is jointly provided by the first charging power output by the AC-DC conversion module 102 and the second charging power output by the energy storage module 101.

A positive output terminal of the AC-DC conversion module 102 is connected to a positive input terminal of the charging module 103, a negative output terminal of the AC-DC conversion module 102 is connected to a positive electrode terminal of the energy storage module 101, and a negative electrode terminal of the energy storage module 101 is connected to a negative input terminal of the charging module 103. In this way, the energy storage module 101 can be connected in series in a charging circuit, that is, the AC-DC conversion module 102 and the energy storage module 101 are connected in series, and the energy storage module 101 and the AC power grid 201 jointly provide a charging power to the charging module 103, that is, provide a sum of the first charging power and the second charging power to the charging module 103, and finally, the charging module 103 outputs the third charging power to the to-be-charged device 202. Since the first charging power can output a positive charging power or a negative charging power based on different working states, the third charging power output by the charging module 103 varies in this case.

It should also be noted that under a condition that the AC-DC conversion module 102 is in the positive polarity working state, since the energy storage module 101 outputs the second charging power to the charging module 103, the third charging power is greater than the first charging power provided by the AC-DC conversion module 102. Moreover, in the embodiments of this disclosure, no requirements are imposed on the input power of the AC power grid 201, and there is no need to configure additional transformers to boost the input power of the AC power grid 201. It should be understood that the second charging power output by the energy storage module 101 can be adaptively adjusted based on a difference between the input power provided by the AC power grid 201, namely the first charging power provided by the AC-DC conversion module 102, and the charging power required for ultra-fast charging, enabling the charging module 103 to charge the to-be-charged device 202 in fast charging/ultra-fast charging mode. Alternatively, when the third charging power is greater than the second charging power, the AC-DC conversion module 102 is in the negative polarity working state, and the second charging power is adjusted based on the negative charging power output by the AC-DC conversion module, to reduce the charging power output to the to-be-charged device 202.

In the storage and charging integrated apparatus provided in the embodiment of this disclosure, the first charging power provided by the AC-DC conversion module and the second charging power provided by the energy storage module are connected in series to perform charging output to the charging module, enabling the charging module to provide the third charging power to the to-be-charged device. In this way, since the energy storage module can output a relatively high second charging power, the storage and charging integrated apparatus enables, just based on the lower power provided by the AC power grid, the charging module to output the third charging power that meets the ultra-fast/fast charging demand. Therefore, there is no need to configure additional transformers in the circuit, which reduces the cost of the storage and charging integrated apparatus, and also reduces the size of the storage and charging integrated apparatus. Moreover, the storage and charging integrated apparatus can be connected to any position of the AC power grid, without being limited by the transformer access points. This improves the flexibility of the storage and charging integrated apparatus, and facilitates the fast charging of electric vehicles. In addition, the AC-DC conversion module has different working states and can provide the first charging power in different directions based on the working states, thereby expanding the range of the third charging power output by the charging module and enhancing the flexibility of charging.

In another embodiment of this disclosure, FIG. 2 is a second schematic diagram of a composition structure of a storage and charging integrated apparatus according to an embodiment of this disclosure. As shown in FIG. 2, the positive electrode terminal of the energy storage module 101 is connected to the negative electrode terminal of the AC-DC conversion module 102, the negative electrode terminal of the energy storage module 101 is connected to the negative electrode terminal of the charging module 103, and the positive electrode terminal of the charging module 103 is connected to the positive electrode terminal of the AC-DC conversion module 102.

That is, the first output terminal P1 of the AC-DC conversion module 102 may be a positive electrode output terminal, the second output terminal P2 of the AC-DC conversion module 102 may be a negative electrode output terminal, the first terminal P3 of the energy storage module 101 may be a positive electrode terminal, the second terminal P4 of the energy storage module 101 may be a negative electrode terminal, the first input terminal P5 of the charging module 103 may be a positive electrode input terminal, and the second input terminal P6 of the charging module 103 may be a negative electrode input terminal.

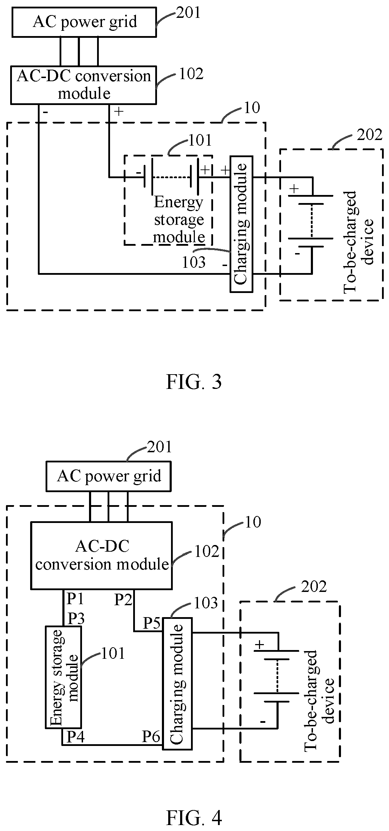

Alternatively, in some embodiments, FIG. 3 is a third schematic diagram of a composition structure of a storage and charging integrated apparatus according to an embodiment of this disclosure. As shown in FIG. 3, the negative electrode terminal of the energy storage module 101 is connected to the positive electrode terminal of the AC-DC conversion module 102, the positive electrode terminal of the energy storage module 101 is connected to the positive electrode terminal of the charging module 103, and the negative electrode terminal of the charging module 103 is connected to the negative electrode terminal of the AC-DC conversion module 102.

The first output terminal P1 of the AC-DC conversion module 102 may be a negative electrode output terminal, the second output terminal P2 of the AC-DC conversion module 102 may be a positive electrode output terminal, the first terminal P3 of the energy storage module 101 may be a negative electrode terminal, the second terminal P4 of the energy storage module 101 may be a positive electrode terminal, the first input terminal P5 of the charging module 103 may be a negative electrode input terminal, and the second input terminal P6 of the charging module 103 may be a positive electrode input terminal.

It should be understood that whether the terminals of the modules are positive electrode terminals or negative electrode terminals are determined according to the specific situation of the device, but in FIGs. 2 and 3, the energy storage module 101 is connected in series to the AC-DC conversion module 102, and the sum of their output powers is provided as the third charging power to the charging module 103. In addition, in this disclosure and the following embodiments, the description is based on the embodiment shown in FIG. 2.

In the storage and charging integrated apparatus provided in the embodiment of this disclosure, the energy storage module can be disposed on the positive electrode side of the AC-DC conversion module or the negative electrode side of the AC-DC conversion module. This can improve the arrangement flexibility of the modules in the storage and charging integrated apparatus.

In some embodiments, FIG. 4 is a fourth schematic diagram of a composition structure of a storage and charging integrated apparatus according to an embodiment of this disclosure. As shown in FIG. 4, the storage and charging integrated apparatus further includes the AC-DC conversion module, where the AC-DC conversion module is configured to provide the first charging power to the charging module and the energy storage module.

In the embodiment of this disclosure, the AC-DC conversion module 102 may alternatively be disposed inside the storage and charging integrated apparatus 10. Although this scheme increases the volume of the storage and charging integrated apparatus 10 to some extent, it lowers the requirement on the charging interface with the AC power grid 201, thereby making charging more convenient.

In the storage and charging integrated apparatus provided in the embodiment of this disclosure, the AC-DC conversion module can alternatively be disposed inside the storage and charging integrated apparatus, facilitating the direct connection of the storage and charging integrated apparatus to the AC power grid for charging, thereby improving the convenience of charging.

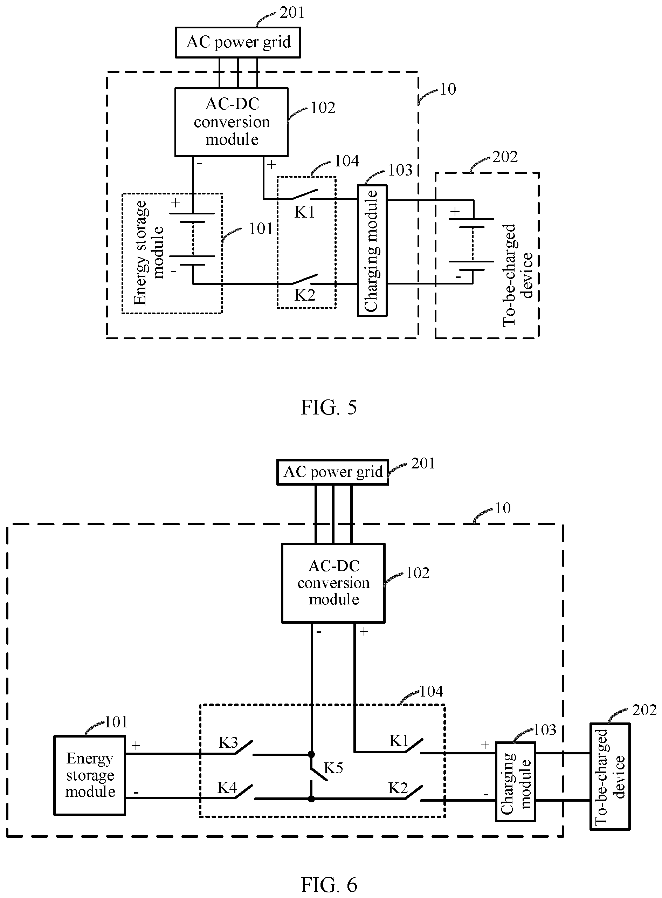

In still another embodiment of this disclosure, FIG. 5 is a fifth schematic diagram of a composition structure of a storage and charging integrated apparatus according to an embodiment of this disclosure. As shown in FIG. 5, the storage and charging integrated apparatus 10 further includes a first switch module 104; and the first switch module 104 includes a first switch K1 and a second switch K2, where the first switch K1 is connected in series between the first output terminal of the AC-DC conversion module 102 and the first input terminal of the charging module 103, and the second switch K2 is connected in series between the second terminal of the energy storage module 101 and the second input terminal of the charging module 103.

In the embodiment of this disclosure, the first switch module 104 is configured to: when the first switch K1 and the second switch K2 are both in an on state, enable the charging module 103 to charge the to-be-charged device 202 based on the first charging power provided by the AC-DC conversion module 102 and the second charging power provided by the energy storage module 101.

It should be noted that FIG. 5 is based on the embodiment shown in FIG. 2 for illustration. It should be understood that the first switch module 104 may alternatively be disposed based on the embodiment shown in FIG. 3, where the first switch K1 is connected in series between the negative electrode terminal of the AC-DC conversion module 102 and the negative electrode input terminal of the charging module 103, and the second switch K2 is connected in series between the positive electrode terminal of the energy storage module 101 and the positive electrode input terminal of the charging module 103. The control logic corresponds to the first switch module 104 shown in FIG. 5 and is not shown herein.

In the embodiment of this disclosure, the first switch K1 and the second switch K2 included in the first switch module 104, as well as the switches in the following embodiments, can all be electronic components that are turned on or off based on drive signals to control the open-circuit or closed-circuit connection in the storage and charging integrated apparatus 10. For example, the switches may be knife switches, or semiconductor devices such as switching transistors, triodes, transistors, IGBTs, and metal-oxide-semiconductor field-effect transistors (Metal-Oxide-Semiconductor Field-Effect Transistor, MOSFET or MOS transistor), which are not limited herein.

It should be noted that as shown in FIG. 5, the first switch K1 is connected in series between the positive electrode terminal of the AC-DC conversion module 102 and the positive input terminal of the charging module 103 to control the on or off state of the circuit between the AC-DC conversion module 102 and the charging module 103; and the second switch K2 is connected in series between the negative electrode terminal of the energy storage module 101 and the negative input terminal of the charging module 103 to control the on or off state of the circuit between the energy storage module 101 and the charging module 103. It should be understood that to prevent power supply abnormalities, the first switch K1 and the second switch K2 need to be in the same state and turned on or off simultaneously.

It should also be noted that when the first switch K1 and the second switch K2 are both in an on state, the circuit including the AC-DC conversion module 102, the energy storage module 101, and the charging module 103 is turned on, and the energy storage module 101 and the AC-DC conversion module 102 thereby jointly provide a charging power to the charging module 103, jointly charging the to-be-charged device 202; and when the first switch K1 and the second switch K2 are both in an off state, the AC-DC conversion module 102 and the energy storage module 101 stop providing a charging power to the charging module 103, thereby stopping charging the to-be-charged device 202.

In the storage and charging integrated apparatus provided in the embodiment of this disclosure, whether the energy storage module and the AC-DC conversion module charge the charging module is controlled by controlling the on or off states of the first switch and the second switch. In this way, the on or off state of the charging circuit can be controlled according to the situation, thereby reducing the power consumption of the storage and charging integrated apparatus.

In some embodiments, FIG. 6 is a sixth schematic diagram of a composition structure of a storage and charging integrated apparatus according to an embodiment of this disclosure. As shown in FIG. 6, the first switch module 104 further includes a third switch K3, a fourth switch K4, and a fifth switch K5, where one terminal of the third switch K3 is connected to the second output terminal of the AC-DC conversion module 102 and one terminal of the fifth switch K5, another terminal of the third switch K3 is connected to the first terminal of the energy storage module 101, one terminal of the fourth switch K4 is connected to the second terminal of the energy storage module 101, another terminal of the fourth switch K4 is connected to another terminal of the fifth switch K5 and one terminal of the second switch K2, and another terminal of the second switch K2 is connected to the second input terminal of the charging module 103.

In the embodiment of this disclosure, the first switch module 104 is configured to: when the first switch K1, the second switch K2, the third switch K3, and the fourth switch K4 are all in an on state and the fifth switch K5 is in an off state, enable the charging module 103 to charge the to-be-charged device 202 based on the first charging power provided by the AC-DC conversion module 102 and the second charging power provided by the energy storage module 101; or is further configured to: when the first switch K1, the second switch K2, and the fifth switch K5 are all in an on state and the third switch K3 and the fourth switch K4 are in an off state, enable the charging module 103 to charge the to-be-charged device 202 based on the first charging power provided by the AC-DC conversion module 102, or feed back energy to the AC power grid 201 based on an output power of the to-be-charged device 202.

It should be noted that the first switch module 104 shown in FIG. 6 is disposed based on the storage and charging integrated apparatus 10 shown in FIG. 2. It should be understood that the first switch module 104 in the embodiments of this disclosure can alternatively be disposed based on the storage and charging integrated apparatus 10 shown in FIG. 3. For whether each terminal represents a positive electrode or a negative electrode, refer to FIG. 3. For the connection method, refer to this embodiment.

It should be noted that in some embodiments, the first switch module 104 may include the first switch K1, the second switch K2, the third switch K3, and the fourth switch K4; and based on the on states of the first switch K1 to the fourth switch K4, the energy storage module 101 and the AC-DC conversion module 102 are connected in series to jointly provide power to the charging module 103; and based on the off states of the first switch K1 to the fourth switch K4, they stop providing power to the charging module 103.

It should also be noted that under a condition that the first switch module 104 includes the first switch K1, the second switch K2, the third switch K3, the fourth switch K4, and the fifth switch K5, if the fifth switch K5 is turned off, and the rest of the switches in the first switch module 104 are turned on, the energy storage module 101 and the AC-DC conversion module 102 are connected in series to jointly provide power to the charging module 103; or if the to-be-charged device 202 requires a low charging power or the to-be-charged device 202 does not support or use the ultra-fast charging function, the first switch K1, the second switch K2, and the fifth switch K5 are controlled to be turned on, and the third switch K3 and the fourth switch K4 are controlled to be turned off, so that only the AC-DC conversion module 102 converts the AC power provided by the AC power grid 201 to output the first charging power which is then provided to the to-be-charged device 202 through the charging module 103, where the energy storage module 101 does not participate in providing power to the to-be-charged device 202; or the first switch K1, the second switch K2, and the fifth switch K5 may be controlled to be turned on, and the third switch K3 and the fourth switch K4 may be controlled to be turned off, to enable the to-be-charged device 202 to deliver energy to the AC power grid 201 based on the vehicle-to-grid (Vehicle-to-Grid, V2G) technology, enhancing the stability of the AC power grid 201.

In the embodiment of this disclosure, the on or off state of each switch in the first switch module 104 needs to be synchronized or completed within a preset time range to prevent charging abnormalities.

In the embodiment of this disclosure, the on or off state of each switch in the first switch module 104, as well as the flow direction of electrical energy in the circuit, can be controlled based on actual needs to implement energy adjustment and optimization.

In the storage and charging integrated apparatus provided in the embodiment of this disclosure, the on or off states of the multiple switches in the first switch module are controlled to charge the to-be-charged device by the AC-DC conversion module alone, or charge the to-be-charged device jointly by the AC-DC conversion module and the energy storage module connected in series, or control the to-be-charged device to feed back energy to the AC power grid. In this way, the charging mode or discharging mode of the to-be-charged device can be switched according to different application scenarios, improving the energy utilization efficiency and the intelligence level of the storage and charging integrated apparatus.

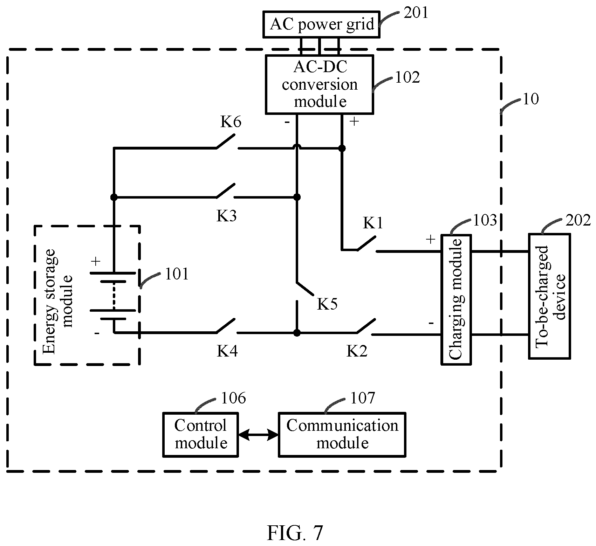

In some embodiments, FIG. 7 is a seventh schematic diagram of a composition structure of a storage and charging integrated apparatus according to an embodiment of this disclosure. As shown in FIG. 7, the storage and charging integrated apparatus 10 further includes a second switch module, and the second switch module includes a sixth switch K6, where one terminal of the sixth switch K6 is connected to the first output terminal of the AC-DC conversion module 102, and another terminal of the sixth switch K6 is connected to the first terminal of the energy storage module 101 and one terminal of the third switch K3.

In the embodiments of this disclosure, the second switch module is configured to: when the fourth switch K4, the fifth switch K5, and the sixth switch K6 are all in an on state, charge the energy storage module 101 based on the first charging power provided by the AC-DC conversion module 102, or feed back energy to the AC power grid 201 based on the output power of the energy storage module 101.

It should be noted that the structure in the embodiments of this disclosure, the second switch module of the embodiments of this disclosure may be disposed based on the structure of the storage and charging integrated apparatus 10 shown in FIGs. 6 and 2, or based on the storage and charging integrated apparatus 10 shown in FIG. 3. For its connection relationship, reference may be made to this embodiment.

As shown in FIG. 7, referring to the above embodiments, when the first switch K1, the second switch K2, and the fifth switch K5 are in an on state, and the third switch K3, the fourth switch K4, and the sixth switch K6 are in an off state, the to-be-charged device 202 can be charged based on the first charging power provided by the AC-DC conversion module 102, or energy can be fed back to the AC power grid 201 based on the output power of the to-be-charged device 202.

Alternatively, as shown in FIG. 7, referring to the above embodiments, under a condition that the first switch K1, the second switch K2, the third switch K3, and the fourth switch K4 are in an on state and the fifth switch K5 and the sixth switch K6 are in an off state, the energy storage module 101 and the AC-DC conversion module 102 are connected in series to charge the to-be-charged device 202 jointly based on the second charging power provided by the energy storage module 101 and the first charging power provided by the AC-DC conversion module 102. In this case, the energy storage module 101 is in a discharging state, and the AC-DC conversion module 102 is in a state of charging the entire vehicle.

Alternatively, as shown in FIG. 7, under a condition that the fourth switch K4, the fifth switch K5, and the sixth switch K6 are all in an on state and the first switch K1, the second switch K2, and the third switch K3 are all in an off state, the AC power grid 201 charges the energy storage module 101, or the energy storage apparatus feeds back energy to the AC power grid 201.

In the storage and charging integrated apparatus provided in the embodiment of this disclosure, based on the on or off state of each switch in the first switch module and the second switch module, the storage and charging integrated apparatus is controlled to implement different charging or discharging functions. In this way, the charging and discharging states of the energy storage module can be controlled according to the demand, thereby improving the energy utilization and management efficiency of the storage and charging integrated apparatus.

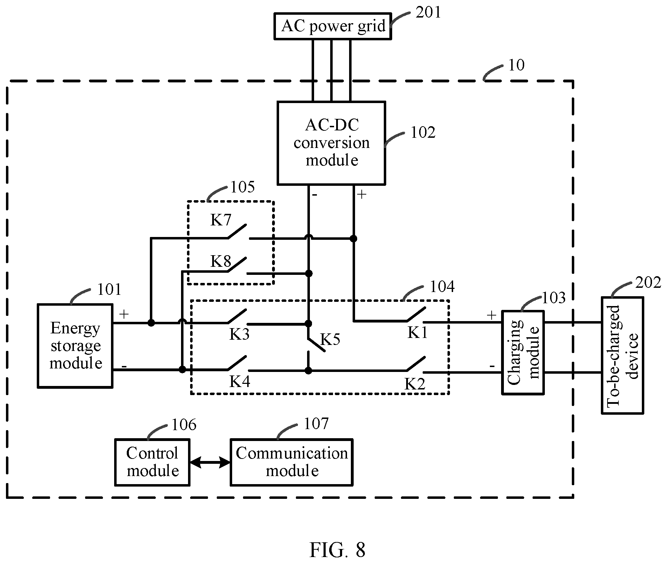

In some embodiments, FIG. 8 is an eighth schematic diagram of a composition structure of a storage and charging integrated apparatus according to an embodiment of this disclosure. As shown in FIG. 8, the storage and charging integrated apparatus 10 further includes a second switch module 105, and the second switch module 105 includes a seventh switch K7 and an eighth switch K8, where the seventh switch K7 is connected in series between the first output terminal of the AC-DC conversion module 102 and the first terminal of the energy storage module 101, and the eighth switch K8 is connected in series between the second output terminal of the AC-DC conversion module 102 and the second terminal of the energy storage module 101.

In the embodiments of this disclosure, the second switch module 105 is configured to: when the seventh switch K7 and the eighth switch K8 are both in an on state, charge the energy storage module 101 based on the first charging power provided by the AC-DC conversion module 102, or feed back energy to the AC power grid 201 based on the output power of the energy storage module 101.

It should be noted that in this embodiment of this disclosure, the first switch module 104 and the second switch module 105 are disposed based on the storage and charging integrated apparatus 10 shown in FIG. 2. Alternatively, in some embodiments, the storage and charging integrated apparatus 10 may only include the second switch module 105. Alternatively, in some embodiments, the first switch module 104 and/or the second switch module 105 may be disposed based on the storage and charging integrated apparatus 10 shown in FIG. 3. For the connection relationship between the terminals of the modules, reference may be made to this embodiment.

The second switch module 105 may include a seventh switch K7 and an eighth switch K8 for controlling the on or off state of the circuit between the energy storage module 101 and the AC-DC conversion module 102.

It should be noted that when the seventh switch K7 and the eighth switch K8 are turned on, the AC-DC conversion module 102 can convert the alternating-current power of the AC power grid 201 into direct-current power and output the first charging power to the energy storage module 101; or when the seventh switch K7 and the eighth switch K8 are turned on, the energy storage module 101 can feed back energy to the AC power grid 201 through the AC-DC conversion module 102. Alternatively, when the seventh switch K7 and the eighth switch K8 are both turned off, the energy storage module 101 and the AC-DC conversion module 102 are disconnected.

In some embodiments, under a condition that the storage and charging integrated apparatus 10 includes the first switch module 104 and the second switch module 105, the first switch K1, the second switch K2, the fifth switch K5, and the seventh switch K7 and the eighth switch K8 may be turned on, and the third switch K3 and the fourth switch K4 may be turned off, to provide the first charging power provided by the AC-DC conversion module 102 to both the energy storage module 101 and the to-be-charged device 202 for charging. It should be understood that if the first switch K1, the second switch K2, the third switch K3, the fourth switch K4, and the fifth switch K5 are turned on, and the seventh switch K7 and the eighth switch K8 are turned off, this will cause a short circuit.

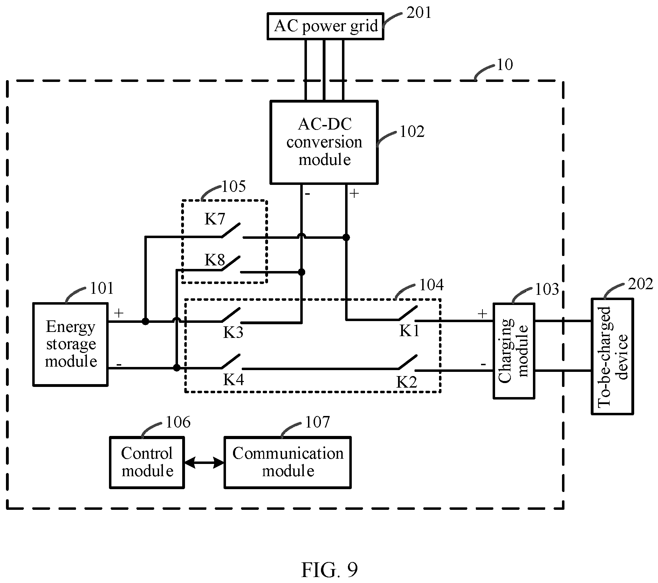

In some embodiments, FIG. 9 is a ninth schematic diagram of a composition structure of a storage and charging integrated apparatus according to an embodiment of this disclosure. As shown in FIG. 9, the first switch module 104 may alternatively include only the first switch K1, the second switch K2, the third switch K3, and the fourth switch K4. In this case, when the first switch K1, the second switch K2, the third switch K3, and the fourth switch K4 are all turned on, the energy storage module 101 and the AC-DC conversion module 102 jointly charge the to-be-charged device 202.

In the storage and charging integrated apparatus provided in the embodiment of this disclosure, the charging or discharging of the energy storage module is controlled by controlling the on or off states of the seventh switch and the eighth switch. In this way, the charging and discharging states of the energy storage module can be controlled according to the demand, thereby improving the energy utilization and management efficiency of the storage and charging integrated apparatus.

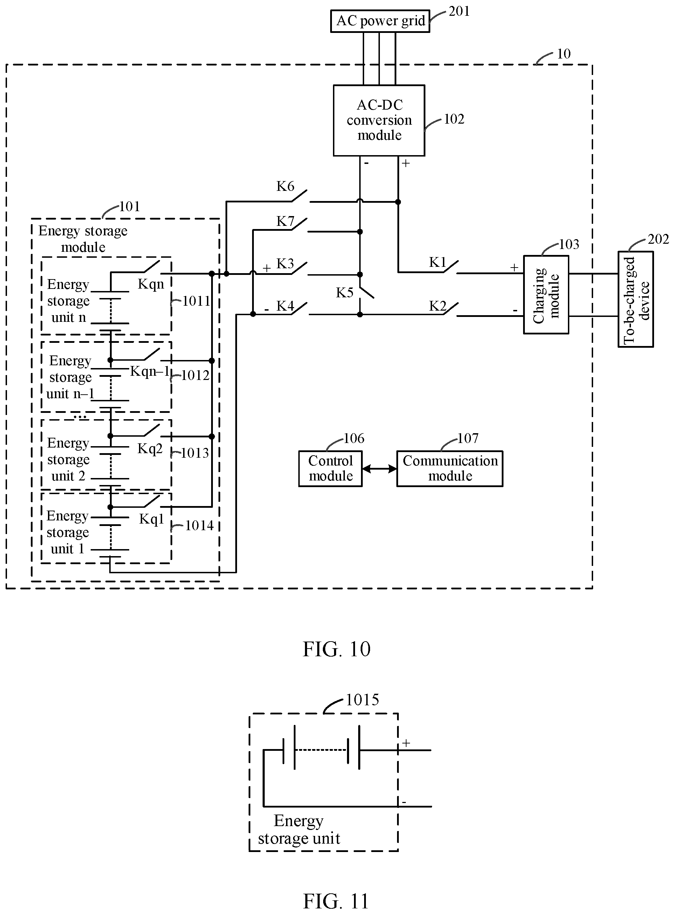

In still another embodiment of this disclosure, FIG. 10 is a tenth schematic diagram of a composition structure of a storage and charging integrated apparatus according to an embodiment of this disclosure. As shown in FIG. 10, the energy storage module 101 includes at least one energy storage unit, where the at least one energy storage unit is connected in series and/or in parallel between the first terminal of the energy storage module 101 and the second terminal of the energy storage module 101 to provide the second charging power.

In the embodiments of this disclosure, the first terminal of the energy storage module 101 may be a positive electrode terminal, and the second terminal of the energy storage module 101 may be a negative electrode terminal; or the first terminal of the energy storage module 101 may be a negative electrode terminal, and the second terminal of the energy storage module 101 may be a positive electrode terminal. In this disclosure and the following embodiments, the description is provided by using an example in which the first terminal of the energy storage module 101 is a positive electrode terminal and the second terminal is a negative electrode terminal.

It should be noted that the energy storage module 101 includes one or more energy storage units: an energy storage unit 1 1014, an energy storage unit 2 1013, ..., an energy storage unit n-1 1012, and an energy storage unit n 1011 (n is a positive integer), each energy storage unit including a positive electrode terminal and a negative electrode terminal. Multiple energy storage units are connected in series and/or in parallel to form the energy storage module 101, enabling the energy storage module 101 to provide the second charging power. In an example, the energy storage unit may be an electric box.

It should also be noted that the multiple energy storage units in the energy storage module 101 may all be connected in parallel, or may all be connected in series, or may be partially connected in series and partially connected in parallel, that is, connected in series-parallel mode, which is not specifically limited herein. In this disclosure and the following embodiments, the description is provided by using an example in which the multiple energy storage units are connected in series. In this case, when there are multiple energy storage units, the power of the energy storage module 101 is a sum of the powers of the multiple energy storage units. This allows the energy storage module 101 to output a high power to charge the to-be-charged device 202, meeting the high-power charging demand without needing to add transformers or expand the transformer capacity on the side of the AC power grid 201.

In the embodiments of this disclosure, the number of energy storage units can be selected and set based on actual needs. When the storage and charging integrated apparatus 10 is only used for low-power charging, one or few energy storage units can be arranged in low-power charging scenarios; when the storage and charging integrated apparatus 10 is used in fast charging/ultra-fast charging scenarios, multiple energy storage unit can be arranged.

In the embodiments of this disclosure, the number of energy storage units in the energy storage module 101 can be set according to actual needs, and the energy storage units can also be freely added or removed through series or parallel connections.

In the storage and charging integrated apparatus provided in the embodiment of this disclosure, the energy storage module includes multiple energy storage units connected in series and/or in parallel. In this way, due to the modularity of the energy storage units, the energy storage units can be freely added or removed, facilitating the fast connection and removal of the energy storage units, thereby improving the charging flexibility of the storage and charging integrated apparatus.

In some embodiments, FIG. 11 is a schematic diagram of a composition structure of an energy storage unit according to an embodiment of this disclosure. As shown in FIG. 11, each energy storage unit 1015 includes an energy storage battery, and each energy storage unit 1015 is configured to provide a fourth charging power based on energy of the energy storage battery, where the fourth charging power is less than or equal to the second charging power.

In the embodiments of this disclosure, the energy storage battery may be a single-cell battery, a multi-cell battery, a blade battery, a battery module, or the like, which is not specifically limited herein.

In the embodiments of this disclosure, the number of energy storage batteries in each energy storage unit may be equal or unequal, which can be set according to specific needs. Each energy storage unit can provide the fourth charging power based on the number of energy storage batteries contained. It should be understood that the fourth charging power corresponding to different energy storage units may be the same or different.

It should be noted that each energy storage unit provides the fourth charging power based on the energy of the energy storage battery. Further, multiple energy storage units are connected in series and/or parallel to provide the second charging power to the to-be-charged device 202. Different charging needs of the to-be-charged device 202 can be met by setting the number of energy storage units and the number of energy storage batteries in each energy storage unit.

In the storage and charging integrated apparatus provided in the embodiment of this disclosure, each energy storage unit includes at least one energy storage battery, which can control the output power of the storage and charging integrated apparatus, thereby meeting different charging needs.

In some embodiments, still referring to FIG. 10, at least some of the at least one energy storage unit includes a third switch module, and the third switch module is connected in series between the first terminal of the corresponding energy storage unit and the second output terminal of the AC-DC conversion module 102.

In the embodiment of this disclosure, the third switch module is configured to: when the third switch module is in an on state, connect in series to the at least one energy storage unit in a charging circuit in which the third switch K3 is located, so as to provide the second charging power.

In the embodiment of this disclosure, the third switch module includes multiple switches, that is, one switch can be disposed in a path connecting each energy storage module 101 and the AC-DC conversion module 102, so as to control the number of energy storage units connected in the charging circuit, thereby controlling the power output to the to-be-charged device 202.

In the case of one energy storage unit, if the energy storage unit includes a switch, when the switch and the third switch K3 are turned on, the energy storage unit and the AC-DC conversion module 102 can be connected in series to jointly provide the second charging power to the charging module 103.

When there are multiple energy storage units, for example, an energy storage unit 1 1014, an energy storage unit 2 1013, ..., an energy storage unit n-1 1012, and an energy storage unit n 1011, and the energy storage unit 1 1014 includes a corresponding switch Kq1, the energy storage unit 2 1013 includes a corresponding switch Kq2, the energy storage unit n-1 1012 includes a corresponding switch Kqn-1, and the energy storage unit n 1011 includes a corresponding switch Kqn, if the switch Kq2 is turned on and the rest switches in the rest energy storage units, that is, in the third switch module, are turned off, the energy storage unit 1 1014 and the energy storage unit 2 1013 are connected in series to the AC-DC conversion module 102 to jointly provide the second charging power to the charging module 103; or understandably, if the switch Kqn is turned on and the switches in the rest energy storage units are turned off, the energy storage unit 1 1014 to the energy storage unit n 1011 are all connected in series to the AC-DC conversion module 102 to jointly provide the second charging power to the charging module 103.

In the storage and charging integrated apparatus provided in the embodiment of this disclosure, the number of energy storage units connected in series to the AC-DC conversion module is controlled by controlling the on or off states of the third switch module. In this way, the number of energy storage units to be connected can be flexibly selected according to the charging power demand of the to-be-charged device, improving the flexibility of charging.

In still another embodiment of this disclosure, based on the embodiments shown in FIGs. 7, 8, 9, and 10, the storage and charging integrated apparatus 10 further includes a control module 106.

The control module 106 is connected to the first switch module 104, the second switch module 105, and the third switch module, and is configured to send drive signals to the first switch module 104, the second switch module 105, and the third switch module, where the drive signals are used to control the on and off states of the first switch module 104, the second switch module 105, and the third switch module.

In the embodiment of this disclosure, the control module 106, also referred to as the control unit of the storage and charging integrated apparatus 10, may include devices such as microcontroller units (Microcontroller Unit, MCU), sensors, or switching circuits, and is configured to monitor, control, and manage the storage and charging integrated apparatus 10.

In the embodiment of this disclosure, the control module 106 may send drive signals to all switches in the first switch module 104, the second switch module 105, and the third switch module. It should be understood that each drive signal can have a different level state and control the on or off state of the corresponding switch based on the level state of the drive signal. For example, when the drive signal is in a high-level state, the corresponding switch can be controlled to be on, and when the drive signal is in a low-level state, the corresponding switch can be controlled to be off.

In the embodiment of this disclosure, the control module 106 may be further configured to detect and monitor the current and voltage conditions of each module in the storage and charging integrated apparatus 10, and generate an alarm promptly when abnormalities occur.

It should also be noted that the control module 106 may be further connected to an interactive interface of the storage and charging integrated apparatus 10, and generate drive signals to control the on or off state of each switch based on the operations selected by the user on the interactive interface, so as to charge the to-be-charged device 202 based on the charging mode required by the user, or feed back energy to the power grid.

In the storage and charging integrated apparatus provided in the embodiment of this disclosure, the control module controls the on or off state of each switch, enabling the storage and charging integrated apparatus to implement different functions. This improves the convenience and safety of controlling the storage and charging integrated apparatus.

In some embodiments, based on the embodiments shown in FIGs. 7, 8, 9, and 10, the storage and charging integrated apparatus 10 further includes a communication module 107, and the communication module 107 is connected to the control module 106; where:
the control module 106 is configured to obtain a status parameter of the storage and charging integrated apparatus 10 and send the status parameter of the storage and charging integrated apparatus 10 to the communication module 107; and
the communication module 107 is configured to receive the status parameters of the storage and charging integrated apparatus 10 and forward the status parameter to a cloud platform.

In the embodiments of this disclosure, the communication module 107, also referred to as a wireless communication module, has a communication function, and can receive status parameters of each module in the storage and charging integrated apparatus 10 collected by the control module 106, such as an input current, an output current, an input voltage, and an output voltage, and transmit these status parameters to the cloud platform.

In the embodiment of this disclosure, the communication module 107 may further receive a control signal from the cloud platform and send the control signal to the control module 106, enabling the control module 106 to generate a drive signal based on the control signal, so as to control the on or off state of each switch. The control signal can be generated based on an operation selected by a user on the interactive interface of the cloud platform. For example, the user can perform batch operations on the storage and charging integrated apparatus 10 by selecting different charging modes or a discharge-to-grid mode.

In the storage and charging integrated apparatus provided in the embodiment of this disclosure, the communication module feeds back the status parameter collected by the control module to the cloud platform. In this way, the operating data of the storage and charging integrated apparatus can be saved in a timely manner, and the operating status of the storage and charging integrated apparatus can be obtained, thereby improving the operational reliability of the storage and charging integrated apparatus.

In some embodiments, the AC-DC conversion module is a bidirectional ACDC module.

It should be noted that the AC-DC conversion module may be an isolated unidirectional ACDC module or an isolated bidirectional ACDC module, with an isolation chip disposed inside for isolating the storage and charging integrated apparatus 10 from the power grid side. The specific structure of the AC-DC conversion module is not limited herein.

In the embodiment of this disclosure, when the AC-DC conversion module is a bidirectional ACDC module, it can not only charge the energy storage module and/or the to-be-charged device 202, but also feed back energy of the energy storage module or the to-be-charged device 202 to the AC power grid 201.

It should also be noted that under a condition that an external power source provides DC power, the storage and charging integrated apparatus 10 can be charged through an input interface.

In the storage and charging integrated apparatus provided in the embodiment of this disclosure, the AC-DC conversion module is a bidirectional ACDC module. In this way, bidirectional energy exchange is implemented between the storage and charging integrated apparatus and the AC power grid, enabling the storage and charging integrated apparatus to not only charge the to-be-charged device but also feed back energy to the power grid. This facilitates peak cut for the power grid, improving the stability and energy utilization of the power grid.

In some embodiments, a ratio between rated energy and rated power of the energy storage module is less than or equal to a first preset value, and a ratio between input power and output power of the storage and charging integrated apparatus 10 is less than or equal to a second preset value, where the first preset value is greater than the second preset value.

In the embodiments of this disclosure, for example, the first preset value may be 1:3, and the second preset value may be 1:4.

It should be noted that the rated energy of the energy storage module can refer to an amount of electricity that the energy storage module can store, that is, a capacity of the energy storage module. The rated power of the energy storage module can refer to the output power of the energy storage module. It should be understood that both the rated energy and rated power of the energy storage module are related to the number of energy storage units contained in the energy storage module. The ratio between the rated energy and rated power of the energy storage module is less than or equal to 1:3, that is, the ratio may be 1:4, 1:5, or the like. The specific value is determined according to the actually output second charging power.

It should also be noted that the input power of the storage and charging integrated apparatus 10 is the power input from the AC power grid to the storage and charging integrated apparatus 10, and that the output power of the storage and charging integrated apparatus 10 is the third charging power provided by the charging module to the to-be-charged device. The ratio between the input power and output power of the storage and charging integrated apparatus 10 is less than or equal to 1:4, that is, the ratio may be 1:5, 1:6, or the like. For example, when the ratio is 1:4, it means that the output power of the storage and charging integrated apparatus 10 is 4 times the input power. Assuming that the input power of the storage and charging integrated apparatus 10 is 150 kilowatts, its output power can reach 600 kilowatts, where 450 kilowatts are provided by the energy storage module.

In the storage and charging integrated apparatus provided in the embodiment of this disclosure, high cost performance ratio and good performance can be achieved in the case of low-power input and high-power output by limiting the ratio between the rated energy and rated power of the energy storage module and the ratio between the input power and output power of the storage and charging integrated apparatus.

In some embodiments, the first charging power is less than or equal to 150 kilowatts, and the third charging power is greater than or equal to 360 kilowatts.

The first charging power is a power output by the AC-DC conversion module to the AC power grid after conversion, and the third charging power is a power provided by the charging module to the to-be-charged device 202.

It should be understood that based on the above embodiments, an appropriate number of energy storage units is selected, or the number of energy storage units connected in the charging circuit is controlled based on the on or off state of the third switch K3, making the output power of the charging module reach 360 kilowatts, 500 kilowatts, 800 kilowatts, 900 kilowatts, or the like, to meet the demand for ultra-fast/fast charging.

It should be noted that the second charging power required to be output by the energy storage module can be determined based on a difference between the third charging power required by the to-be-charged device 202 and output by the charging module and the first charging power output by the AC-DC conversion module, and then the number of energy storage units and the number of energy storage batteries are configured, enabling the charging module to output the third charging power meeting the requirement. For example, when the required third charging power is 360 kilowatts and the first charging power is 150 kilowatts, the second charging power output by the energy storage module needs to be 210 kilowatts.

In the storage and charging integrated apparatus provided in the embodiment of this disclosure, the first charging power and the third charging power are limited so as to enable the storage and charging integrated apparatus to implement low-power input and high-power output functions without configuring additional transformers in the storage and charging integrated apparatus, thereby implementing ultra-fast charging for the to-be-charged device.

In still another embodiment of this disclosure, a charging control method is provided, applied to the storage and charging integrated apparatus 10 in the above embodiments. As shown in FIG. 1, the storage and charging integrated apparatus 10 includes an energy storage module 101 and a charging module 103.

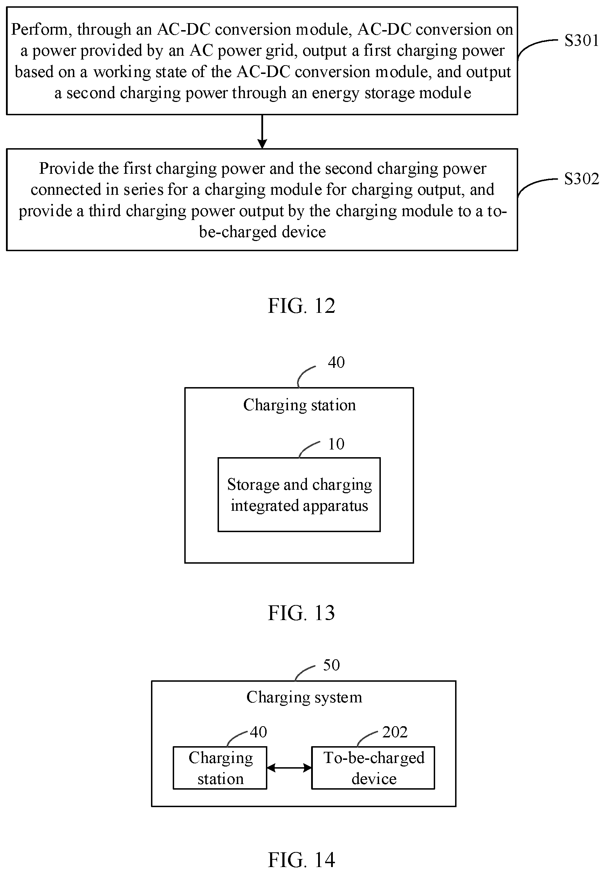

As shown in FIG. 12, the method may include the following steps.

S301. Perform, through the AC-DC conversion module, AC-DC conversion on a power provided by an AC power grid, output a first charging power based on a working state of the AC-DC conversion module, and output a second charging power through the energy storage module.

The working state of the AC-DC conversion module includes a positive polarity working state and a negative polarity working state.

S302. Provide the first charging power and the second charging power connected in series for the charging module for charging output, and provide a third charging power output by the charging module to a to-be-charged device.

The third charging power is greater than the first charging power.

In some embodiments, as shown in FIG. 5, the storage and charging integrated apparatus 10 further includes a first switch module, and the first switch module includes a first switch and a second switch; and the method further includes:
when the first switch and the second switch are both in an on state, enabling the charging module to charge the to-be-charged device based on the first charging power provided by the AC-DC conversion module and the second charging power provided by the energy storage module.

In some embodiments, as shown in FIG. 6, the storage and charging integrated apparatus 10 further includes a first switch module 104, and the first switch module 104 includes a first switch K1, a second switch K2, a third switch K3, a fourth switch K4, and a fifth switch K5; and the method further includes:
when the first switch K1, the second switch K2, the third switch K3, and the fourth switch K4 are all in an on state and the fifth switch K5 is in an off state, enabling the charging module 103 to charge the to-be-charged device 202 based on the first charging power provided by the AC-DC conversion module 102 and the second charging power provided by the energy storage module 101; or when the first switch K1, the second switch K2, and the fifth switch K5 are all in an on state and the third switch K3 and the fourth switch K4 are in an off state, enabling the charging module 103 to charge the to-be-charged device 202 based on the first charging power provided by the AC-DC conversion module 102, or feeding back energy to the AC power grid based on an output power of the to-be-charged device 202.

In some embodiments, as shown in FIG. 7, the storage and charging integrated apparatus 10 further includes a second switch module 105, and the second switch module 105 includes a sixth switch K6; and the method further includes:
when the fourth switch K4, the fifth switch K5, and the sixth switch K6 are all in an on state, charging the energy storage module 101 based on the first charging power provided by the AC-DC conversion module 102, or feeding back energy to the AC power grid based on an output power of the energy storage module 101.

In some embodiments, as shown in FIG. 8, the storage and charging integrated apparatus 10 further includes a second switch module 105, and the second switch module 105 includes a seventh switch K7 and an eighth switch K8; and the method further includes:
when the seventh switch K7 and the eighth switch K8 are both in an on state, charging the energy storage module 101 based on the first charging power provided by the AC-DC conversion module 102; or feeding back energy to the AC power grid based on an output power of the energy storage module 101.

In some embodiments, as shown in FIG. 10, the energy storage module 101 includes at least one energy storage unit, each energy storage unit includes an energy storage battery, and at least some of the at least one energy storage unit includes a third switch module; and the method may further include:
when the third switch module is in an on state, connecting the third switch module in series to the at least one energy storage unit in a charging circuit in which the third switch K3 is located, to provide the second charging power.

In some embodiments, as shown in the above embodiments in FIGs. 7, 8, 9, and 10, the storage and charging integrated apparatus 10 further includes a control module 106; and the method may further include:
sending, by the control module 106, drive signals to the first switch module 104, the second switch module 105, the third switch module, and the third switch module, and controlling the on and off states of the first switch module 104, the second switch module 105, the third switch module, and the third switch module based on the drive signals.

In some embodiments, as shown in the above embodiments in FIGs. 7, 8, 9, and 10, the storage and charging integrated apparatus 10 further includes a communication module 107; and the method may further include:
obtaining, by the control module 106, a status parameter of the storage and charging integrated apparatus, and sending the status parameter to the communication module 107; and
receiving, by the communication module 107, the status parameter of the storage and charging integrated apparatus, and forwarding the status parameter to a cloud platform.

According to the charging control method provided in the embodiment of this disclosure, the first charging power provided by the AC-DC conversion module and the second charging power provided by the energy storage module are combined to perform charging output to the charging module, enabling the charging module to provide the third charging power to the to-be-charged device. In this way, since the energy storage module can output a relatively high second charging power, the storage and charging integrated apparatus enables, just based on a low power provided by an AC power grid, the charging module to output a relatively high third charging power that meets the ultra-fast/fast charging demand. Therefore, there is no need to configure additional transformers in the circuit, which reduces the cost of the storage and charging integrated apparatus, and also reduces the size of the storage and charging integrated apparatus. Moreover, the storage and charging integrated apparatus can be connected to any position of the AC power grid, without being limited by the transformer access points. This improves the flexibility of the storage and charging integrated apparatus, and facilitates the fast charging of electric vehicles.

In still another embodiment of this disclosure, FIG. 13 is a schematic diagram of a composition structure of a charging station according to an embodiment of this disclosure. As shown in FIG. 13, the charging station 40 includes the storage and charging integrated apparatus 10 in the above embodiments.

In the embodiment of this disclosure, the charging station 40 may include the storage and charging integrated apparatus 10 in the above embodiments, and may further include other devices interacting with a user, supporting components, or the like, which are not specifically limited herein.

In still another embodiment of this disclosure, FIG. 14 is a first schematic diagram of a composition structure of a charging system according to an embodiment of this disclosure. As shown in FIG. 14, the charging system includes a to-be-charged device 202 and the charging station 40 in the above embodiment.

As in the above embodiments, the charging station 40 includes the storage and charging integrated apparatus, and the storage and charging integrated apparatus charges the to-be-charged device 202.

An input power of the storage and charging integrated apparatus is a low-power input, with the input power ≤150 kW, and an output power of the storage and charging integrated apparatus is a high-power output, with the output power ≥360 kW. That is, when the input power of the storage and charging integrated apparatus is ≤150 kW, a system output power of ≥360 kW is achieved through the energy storage module inside the storage and charging integrated apparatus. Moreover, the AC-DC conversion module connected to the transformer, that is, the bidirectional AC/DC apparatus, has a rated power of ≤150 kW.

In addition, a ratio between the rated energy and rated power of the energy storage module is not greater than 1:3. Based on the energy storage module, a ratio between the input power and output power of the storage and charging integrated apparatus can be not greater than 1:4.

In the embodiment of this disclosure, the energy storage apparatus is connected in series in an AC/DC output high-voltage circuit, an extreme system architecture can be implemented, capable of implementing low-power input and high-power output without a DCDC power module, thereby significantly reducing the cost.

As shown in FIG. 1, a negative electrode of the energy storage module 101 inside the storage and charging integrated apparatus 10 is connected to the to-be-charged device 202, that is, a negative electrode of a vehicle battery system, and the energy storage module 101 inside the storage and charging integrated apparatus 10 is connected in series to the vehicle battery system, so that the AC/DC charges the vehicle battery system. That is, the energy storage module 101 inside the storage and charging integrated apparatus 10 is connected in series to an electric vehicle battery, and a positive electrode of the energy storage module 101 is connected to a positive electrode of the electric vehicle battery. U1 - U2 ≤ 250 V, a power P of the AC/DC is ≤150 kW, and a charging power P for the vehicle is ≥360 kW. U1 is a voltage value corresponding to the to-be-charged device 202, and U2 is a voltage value corresponding to the energy storage module 101.

In the embodiment of this disclosure, as shown in FIG. 2, the energy storage module 101 inside the storage and charging integrated apparatus 10 may also be connected in series to the electric vehicle battery, and the negative electrode of the energy storage module 101 is connected to the negative electrode of the electric vehicle. As shown in FIGs. 2 and 3, U1 - U2 ≤ Uq (for example, Uq ≤ 350 V), and the electric vehicle battery is charged through the AC-DC conversion module 102, that is, the AC/DC. In this case, the electric vehicle battery is in a charging state, and the energy storage apparatus inside the storage and charging integrated apparatus 10 is in a discharging state. U1 is a voltage value corresponding to the to-be-charged device 202, U2 is a voltage value corresponding to the energy storage module 101, and Uq is a voltage value output by the AC power grid after conversion.

As shown in FIG. 7, the functions such as charging and V2G can be implemented by controlling the on or off states of multiple switches.

When the storage and charging integrated apparatus 10 charges the vehicle, K5 and K6 are turned off, and K1, K2, K3, and K4 are turned on. The energy storage module 101 is connected in series in the AC/DC high-voltage circuit, and the energy storage module 101 and the AC/DC apparatus charge the vehicle together. In this case, the energy storage module 101 is in a discharging state, and the AC/DC is in a state of charging the entire vehicle.

When no vehicle is being charged, and only the AC power grid supplies energy to the energy storage module 101 inside the storage and charging integrated apparatus 10, K1, K2, and K3 need to be turned off, and K4, K5, and K6 need to be turned on, so that the AC power grid charges the energy storage module 101 alone.

When the storage and charging integrated apparatus 10 charges the vehicle, and the energy of the energy storage apparatus inside the integrated apparatus is insufficient, the vehicle is charged by the power grid alone. In this case, K3, K4, and K6 need to be turned off, and K1, K2, and K5 need to be turned on. The AC power grid charges the to-be-charged device 202 alone.

When the V2G function is implemented, the vehicle feeds back energy to the AC power grid. In this case, K3, K4, and K6 need to be turned off, and K1, K2, and K5 need to be turned on. The to-be-charged device 202 feeds back energy to the AC power grid.

When the function of the energy storage apparatus feeding back energy to the power grid is implemented, K1, K2, and K3 need to be turned off, and K4, K5, and K6 need to be turned on. The energy storage apparatus inside the integrated apparatus feeds back energy to the power grid.

As shown in FIG. 8, the positive electrode of the energy storage module 101 is connected to a negative electrode of the AC-DC conversion module 102, namely the AC/DC apparatus, through K3, the negative electrode of the energy storage module 101 is connected to a negative electrode of a charging gun through K4 and K2, and a positive electrode of the AC/DC apparatus is connected to a positive electrode of the charging gun through K1, so as to connect the energy storage module 101 in series in the AC/DC high-voltage circuit. The energy storage module 101 is directly connected in series in the high-voltage circuit to charge the to-be-charged device 202, such as a vehicle.

When the storage and charging integrated apparatus 10 charges the vehicle, K5, K7, and K8 are turned off, and K1, K2, K3, and K4 are turned on. The energy storage module 101 is connected in series in the AC/DC high-voltage circuit, and the energy storage module 101 and the AC/DC apparatus charge the vehicle together. In this case, the energy storage module 101 is in a discharging state, and the AC/DC is in a state of charging the entire vehicle.

When no vehicle is being charged, K7 and K8 are turned on, and K1, K2, K3, K4, and K5 are turned off. The power grid charges the energy storage module 101 through the AC/DC.

When the V2G function is enabled, K1, K2, and K5 are turned on, and K3, K4, K7, and K8 are turned off. The vehicle feeds back energy to the power grid through the AC/DC apparatus.

As shown in FIG. 9, the positive electrode of the energy storage module 101 is connected to the negative electrode of the AC/DC apparatus through K3, the negative electrode of the energy storage apparatus is connected to the negative electrode of the charging gun through K4 and K2, and the positive electrode of the AC/DC apparatus is connected to the positive electrode of the charging gun through K1, so as to connect the energy storage apparatus in series in the AC/DC high-voltage circuit. The energy storage apparatus is directly connected in series in the high-voltage circuit to charge the vehicle.

When the vehicle is charged, K7 and K8 are turned off, and K1, K2, K3, and K4 are turned on. The energy storage module 101 is connected in series in the AC/DC high-voltage circuit, and the energy storage module 101 and the AC/DC apparatus charge the vehicle together. In this case, the energy storage module 101 is in a discharging state, and the AC/DC is in a state of charging the entire vehicle.

When no vehicle is being charged, K7 and K8 are turned on, and K1, K2, K3, and K4 are turned off. The power grid charges the energy storage apparatus through the AC/DC.

As shown in FIG. 10, to adapt to different vehicle voltage platforms (for example, the vehicle voltage platform is 400 V or 800 V), the energy storage module 101 is divided into energy storage units 1 to n. The energy storage unit is connected to the high-voltage circuit by turning on only one of the switch Kq1, or the switch Kq2, or the switch Kqn-1, or the switch Kqn. The energy storage unit connected to the high-voltage circuit is connected in series to the AC/DC apparatus (by turning off K5, K6, and K7, and turning on switches K1, K2, K3, and K4) to jointly charge the entire vehicle. For example, when the vehicle voltage platform is 400 V, Kq2 can be turned on, and switches Kq1, Kqn-1, and Kqn can be turned off, so as to connect the energy storage unit 1 and the energy storage unit 2 to the high-voltage circuit. For example, when the vehicle voltage platform is 800 V, Kqn can be turned on, and switches Kq1, Kq2, and Kqn-1 can be turned off, so as to connect the energy storage unit 1, the energy storage unit 2, the energy storage unit 3, and the energy storage unit 4 to the high-voltage circuit.

Similarly, when no vehicle is being charged, the energy storage apparatus can be connected to the high-voltage circuit by turning on only one of the switch Kq1, or Kq2, or Kqn-1, or Kqn. Additionally, the power grid charges the energy storage module 101 through the AC/DC by turning on K6 and K7 and turning off K1, K2, K3, K4, and K5.

When the V2G function is enabled, K1, K2, and K5 are turned on, and the switches K3, K4, K6, and K7 are turned off. The energy storage unit is connected to the high-voltage circuit by turning on only one of the switch Kq1, or Kq2, or Kqn-1, or Kqn, so as to implement the V2G function.

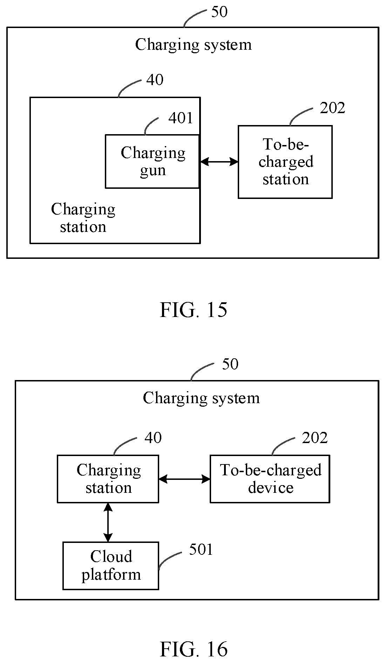

In some embodiments, FIG. 15 is a second schematic diagram of a composition structure of a charging system according to an embodiment of this disclosure. As shown in FIG. 15, the charging module in the charging station 40 includes a charging gun 401, and an output terminal of the charging gun 401 is connected to the to-be-charged device 202, where
the storage and charging integrated apparatus is configured to charge the to-be-charged device 202 through the charging gun based on a first charging power provided by the AC-DC conversion module and a second charging power provided by the energy storage module; where a third charging power is greater than the first charging power.

It should be noted that in the embodiment of this disclosure, the charging module and/or the charging gun may be disposed inside the storage and charging integrated apparatus or outside the storage and charging integrated apparatus and is connected to the storage and charging integrated apparatus when the to-be-charged device 202 needs to be charged, which is not specifically limited herein.

In some embodiments, FIG. 16 is a third schematic diagram of a composition structure of a charging system according to an embodiment of this disclosure. As shown in FIG. 16, the charging system 50 further includes a cloud platform 501, and the cloud platform 501 is connected to the storage and charging integrated apparatus, where the cloud platform 501 is configured to receive a status parameter of the storage and charging integrated apparatus.

In the embodiment of this disclosure, the cloud platform 501 may be provided on a cloud server to obtain a status parameter collected by the control module in the storage and charging integrated apparatus and display the status parameter to an operator.

In the charging system provided in the embodiment of this disclosure, the charging gun charges the to-be-charged device, improving the stability of the charging process; and the cloud platform receives the status parameter of the storage and charging integrated apparatus, facilitating real-time monitoring of the status of the storage and charging integrated apparatus and timely handling of abnormalities upon occurrence.

It should be understood by those skilled in the art that this disclosure can be implemented in the form of hardware embodiments, software embodiments, or embodiments combining software and hardware. Moreover, this disclosure can be implemented in the form of a computer program product on one or more computer-usable storage media (including but not limited to disk storage and optical storage) containing computer-usable program code.

It should also be understood that "one embodiment" or "an embodiment" mentioned throughout the specification means that specified features, structures, or characteristics related to the embodiment are included in at least one embodiment of this disclosure. Therefore, "in one embodiment" or "in an embodiment" appearing throughout the specification does not necessarily refer to the same embodiment. Moreover, these specified features, structures, or characteristics may be combined in one or more embodiments in any appropriate manner. It should be understood that in the embodiments of this disclosure, the sequence numbers of the above steps/processes do not imply the order of execution. The order of execution of the steps/processes should be determined by their functions and internal logic and should not be construed as limiting the implementation process of the embodiments of this disclosure. The sequence numbers of the embodiments of this disclosure are only for description and do not represent which embodiments are more preferable.

It should be noted the term "include", "comprise", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. Without more constraints, an element preceded by "includes a ..." does not preclude the presence of other identical elements in the process, method, article, or apparatus that includes the element.

In the several embodiments provided by this disclosure, it should be understood that the disclosed system, device, and method may be implemented in other manners. For example, the device embodiment described above is merely an example. For example, the unit division is merely logical function division, and there may be another division manner in actual implementation. For example, a plurality of units or components may be combined or may be integrated into another system, or some characteristics may be ignored or not performed. In addition, the displayed or discussed mutual couplings or direct couplings or communication connections may be implemented by using some interfaces. The indirect couplings or communication connections between the devices or units may be implemented in electrical, mechanical, or other forms.

The units described as separate components may or may not be physically separate. The components displayed as units may or may not be physical units, and may be located in one place or distributed across multiple network units. Part or all of the units can be selected according to actual needs to achieve the objectives of the embodiments of this disclosure. In addition, the functional units in the embodiments of this disclosure may be integrated into one processing unit, or each of the units may exist alone physically, or two or more units may be integrated into one unit. The integrated unit may be implemented in a form of hardware, or may be implemented in a form of hardware and software functional units.

The foregoing descriptions are merely example embodiments of this disclosure, but are not intended to limit the protection scope of this disclosure. Any modifications, equivalent replacements, and improvements made within the spirit and principles of this disclosure should be included within the scope of protection of this disclosure.

## Claims

1. A storage and charging integrated apparatus, the storage and charging integrated apparatus comprising an energy storage module and a charging module, wherein
a first input terminal of the charging module is connected to a first output terminal of an AC-DC conversion module, a first terminal of the energy storage module is connected to a second output terminal of the AC-DC conversion module, a second terminal of the energy storage module is connected to a second input terminal of the charging module, and an input terminal of the AC-DC conversion module is connected to an AC power grid; a working state of the AC-DC conversion module comprises a positive polarity working state and a negative polarity working state, and the AC-DC conversion module is configured to provide a first charging power based on the working state; and
the charging module is configured to perform charging output based on the first charging power and a second charging power connected in series, and provide a third charging power output by the charging module for a to-be-charged device; wherein the second charging power is provided by the energy storage module, and the third charging power is greater than the first charging power.

2. The storage and charging integrated apparatus according to claim 1, wherein
a positive electrode terminal of the energy storage module is connected to a negative electrode terminal of the AC-DC conversion module, a negative electrode terminal of the energy storage module is connected to a negative electrode terminal of the charging module, and a positive electrode terminal of the charging module is connected to a positive electrode terminal of the AC-DC conversion module; or
a negative electrode terminal of the energy storage module is connected to a positive electrode terminal of the AC-DC conversion module, a positive electrode terminal of the energy storage module is connected to a positive electrode terminal of the charging module, and a negative electrode terminal of the charging module is connected to a negative electrode terminal of the AC-DC conversion module.

3. The storage and charging integrated apparatus according to claim 2, wherein the storage and charging integrated apparatus further comprises the AC-DC conversion module; wherein
the AC-DC conversion module is configured to provide the first charging power to the charging module and the energy storage module.

4. The storage and charging integrated apparatus according to claim 1, wherein the storage and charging integrated apparatus further comprises a first switch module, wherein
the first switch module comprises a first switch and a second switch, the first switch is connected in series between the first output terminal of the AC-DC conversion module and the first input terminal of the charging module, and the second switch is connected in series between the second terminal of the energy storage module and the second input terminal of the charging module.

5. The storage and charging integrated apparatus according to claim 4, wherein the first switch module further comprises a third switch, a fourth switch, and a fifth switch, wherein
one terminal of the third switch is connected to the second output terminal of the AC-DC conversion module and one terminal of the fifth switch, another terminal of the third switch is connected to the first terminal of the energy storage module, one terminal of the fourth switch is connected to the second terminal of the energy storage module, another terminal of the fourth switch is connected to another terminal of the fifth switch and one terminal of the second switch, and another terminal of the second switch is connected to the second input terminal of the charging module.

6. The storage and charging integrated apparatus according to claim 5, wherein the storage and charging integrated apparatus further comprises a second switch module, and the second switch module comprises a sixth switch, wherein
one terminal of the sixth switch is connected to the first output terminal of the AC-DC conversion module, and another terminal of the sixth switch is connected to the first terminal of the energy storage module and one terminal of the third switch.

7. The storage and charging integrated apparatus according to claim 5, wherein the storage and charging integrated apparatus further comprises a second switch module, and the second switch module comprises a seventh switch and an eighth switch, wherein
the seventh switch is connected in series between the first output terminal of the AC-DC conversion module and the first terminal of the energy storage module, and the eighth switch is connected in series between the second output terminal of the AC-DC conversion module and the second terminal of the energy storage module.

8. The storage and charging integrated apparatus according to any one of claims 1 to 7, wherein the energy storage module comprises at least one energy storage unit, wherein
the at least one energy storage unit is connected in series and/or in parallel between the first terminal of the energy storage module and the second terminal of the energy storage module to provide the second charging power.

9. The storage and charging integrated apparatus according to claim 8, wherein each energy storage unit comprises an energy storage battery, and each energy storage unit is configured to provide a fourth charging power based on energy of the energy storage battery; wherein the fourth charging power is less than or equal to the second charging power.

10. The storage and charging integrated apparatus according to claim 9, wherein at least some of the at least one energy storage unit comprises a third switch module, and the third switch module is connected in series between a first terminal of the corresponding energy storage unit and the second output terminal of the AC-DC conversion module.

11. The storage and charging integrated apparatus according to any one of claims 1 to 10, wherein the storage and charging integrated apparatus further comprises a control module, wherein
the control module is connected to the first switch module, the second switch module, and the third switch module, and is configured to send drive signals to the first switch module, the second switch module, and the third switch module, wherein the drive signals are used to control on and off states of the first switch module, the second switch module, and the third switch module.

12. The storage and charging integrated apparatus according to any one of claims 1 to 11, wherein the storage and charging integrated apparatus further comprises a communication module, and the communication module is connected to the control module, wherein
the control module is configured to obtain a status parameter of the storage and charging integrated apparatus and send the status parameter to the communication module; and
the communication module is configured to receive the status parameter of the storage and charging integrated apparatus and forward the status parameter to a cloud platform.

13. The storage and charging integrated apparatus according to any one of claims 1 to 12, wherein the AC-DC conversion module is a bidirectional ACDC module.

14. The storage and charging integrated apparatus according to any one of claims 1 to 12, wherein a ratio between rated energy and rated power of the energy storage module is less than or equal to a first preset value; and
a ratio between input power and output power of the storage and charging integrated apparatus is less than or equal to a second preset value; wherein the first preset value is greater than the second preset value.

15. The storage and charging integrated apparatus according to any one of claims 1 to 12, wherein the first charging power is less than or equal to 150 kilowatts, and the third charging power is greater than or equal to 360 kilowatts.

16. A charging control method, applied to a storage and charging integrated apparatus, the storage and charging integrated apparatus comprising an energy storage module and a charging module, wherein the method comprises:
performing, through the AC-DC conversion module, AC-DC conversion on a power provided by an AC power grid, outputting a first charging power based on a working state of the AC-DC conversion module, and outputting a second charging power through the energy storage module, wherein the working state of the AC-DC conversion module comprises a positive polarity working state and a negative polarity working state; and
providing the first charging power and the second charging power connected in series for the charging module for charging output, and providing a third charging power output by the charging module for a to-be-charged device; wherein the third charging power is greater than the first charging power.

17. The method according to claim 16, wherein the storage and charging integrated apparatus further comprises a first switch module, and the first switch module comprises a first switch and a second switch; and the method further comprises:
when the first switch and the second switch are both in an on state, enabling the charging module to charge the to-be-charged device based on the first charging power provided by the AC-DC conversion module and the second charging power provided by the energy storage module.

18. The method according to claim 17, wherein the storage and charging integrated apparatus further comprises a first switch module, and the first switch module comprises a first switch, a second switch, a third switch, a fourth switch, and a fifth switch; and the method further comprises:
when the first switch, the second switch, the third switch, and the fourth switch are all in an on state and the fifth switch is in an off state, enabling the charging module to charge the to-be-charged device based on the first charging power provided by the AC-DC conversion module and the second charging power provided by the energy storage module; or when the first switch, the second switch, and the fifth switch are all in an on state and the third switch and the fourth switch are in an off state, enabling the charging module to charge the to-be-charged device based on the first charging power provided by the AC-DC conversion module, or feeding back energy to the AC power grid based on an output power of the to-be-charged device.

19. The method according to claim 18, wherein the storage and charging integrated apparatus further comprises a second switch module, and the second switch module comprises a sixth switch; and the method further comprises:
when the fourth switch, the fifth switch, and the sixth switch are all in an on state, charging the energy storage module based on the first charging power provided by the AC-DC conversion module, or feeding back energy to the AC power grid based on an output power of the energy storage module.

20. The method according to claim 18, wherein the storage and charging integrated apparatus further comprises a second switch module, and the second switch module comprises a seventh switch and an eighth switch; and the method further comprises:
when the seventh switch and the eighth switch are both in an on state, charging the energy storage module based on the first charging power provided by the AC-DC conversion module; or feeding back energy to the AC power grid based on an output power of the energy storage module.

21. The method according to any one of claims 16 to 20, wherein the energy storage module comprises at least one energy storage unit, and at least some of the at least one energy storage unit comprises a third switch module; and the method further comprises:
when the third switch module is in an on state, connecting the third switch module in series to the at least one energy storage unit in a charging circuit in which the third switch is located, to provide the second charging power.

22. A charging station, wherein the charging station comprises the storage and charging integrated apparatus according to any one of claims 1 to 15.

23. A charging system, wherein the charging system comprises a to-be-charged device and the charging station according to claim 22.

24. The charging system according to claim 23, wherein the charging module comprises a charging gun, and an output terminal of the charging gun is connected to the to-be-charged device; wherein
the storage and charging integrated apparatus is configured to charge the to-be-charged device through the charging gun based on a first charging power provided by the AC-DC conversion module and a second charging power provided by the energy storage module; wherein the third charging power is greater than the first charging power.

25. The charging system according to claim 23, wherein the charging system further comprises a cloud platform, and the cloud platform is connected to the storage and charging integrated apparatus, wherein
the cloud platform is configured to receive a status parameter of the storage and charging integrated apparatus.
